# EUROPÄISCHE PATENTSCHRIFT

(11) **EP 0 607 830 B1**
(45) Veröffentlichungstag und Bekanntmachung des Hinweises auf die Patenterteilung: **09.05.2001**
(21) Anmeldenummer: 94100232.1
(22) Anmeldetag: 10.01.1994
(51) Int. Cl.: B60M 1/20

(54) **Auslegersystem für Oberleitungen elektrischer Fahrzeuge**
Support system for overhead wires used by electrical vehicles
Système de support d'une caténaire pour véhicules électriques

(30) Priorität: 21.01.1993 DE 4301556
(43) Veröffentlichungstag der Anmeldung: 27.07.1994
(73) Patentinhaber: SIEMENS AKTIENGESELLSCHAFT, 80333 München (DE)
(72) Erfinder: Ganshorn, Rolf-Dieter, D-68169 Mannheim (DE); Leray, Philippe, Dipl.-Ing. (FH), D-67061 Ludwigshafen (DE)

(56) Entgegenhaltungen:
- DE-A- 3 511 900
- DE-U- 9 005 168
- DE-U- 9 010 747
- DE-U- 9 017 415

## Beschreibung

Die Erfindung betrifft ein Auslegersystem für Oberleitungen elektrischer Fahrzeuge.

Bei den bekannten Auslegersystem für Oberleitungen elektrischer Fahrzeuge, insbesondere elektrischer Bahnen, handelt es sich um zylindrische Formkörper aus Aluminium bzw. aus Kunststoff, die als Rohr-, Stab- oder Rechteckprofil ausgeführt sind. Die Armaturen (Oberleitungsbauteile) werden mittels Bügelschrauben, zweigeteilten und geschlossenen Rohrschellen sowie mittels Rechteckschellen befestigt. Für Ausleger mit verschiedenen Durchmessern sind deshalb Armaturen unterschiedlicher Größe erforderlich.

Aus dem Siemens-Prospekt "Einzelteile für Ausleger aus Aluminium für Oberleitungen im Nahverkehr", Bestell-Nr. A19100-E432-A899 sind aus Aluminium gefertigte Ausleger für Oberleitungen elektrischer Bahnen sowie Oberleitungsbauteile und Befestigungselemente aus Aluminium bekannt. Die Befestigungselemente sind teilweise auch für Ausleger aus Kunststoffstäben geeignet.

Ferner ist durch die DE 35 11 900 A1 ein Seitenhalter für Oberleitungen elektrischer Bahnen bekannt, dessen Isolierstab einen quadratischen, runden oder ovalen Querschnitt aufweist. In der DE 35 11 900 A1 ist außerdem ein hochkant angeordnetes Rechteckprofil als Isolierstab beschrieben. Gemäß einer besonderen Ausgestaltung kann der Isolierstab aus glasfaserverstärktem Kunststoff gefertigt sein. Die Armaturen (Gelenkhaken, Klemmenhalter) werden axial aufgeschoben und mittels eines Befestigungselementes (Hülse, Keil und Schraube) kraftschlüssig befestigt.

Weiterhin sind in dem DE 90 10 747 U1 Ausleger für Oberleitungen elektrischer Bahnen beschrieben, die aus glasfaserverstärktem Kunststoff hergestellt und vorzugsweise als Rundstab ausgebildet sind.

Die DE 25 31 313 A1 beschreibt ein Bausystem für Gestelle, die Kleiderstangen tragen. Das Gestell besteht aus Profilelementen, die wenigstens eine Nut aufweisen. In die Nuten werden zu den Profilelementen korrespondierende Teile eingesetzt. Durch Verdrehen der Profilelemente gegeneinander wird eine verdrehfeste Verbindung zwischen den Profilelementen erzielt.

Durch das DE 90 17 415 U1 ist eine Hammerkopfschraube bekannt, die als Befestigungselement für die Montage von Messeoder Ausstellungsständen dient. Die Hammerkopfschraube kann unter Zuhilfenahme verschiedener Schraubendrehwerkzeuge in Längsschlitzen von profilierten Tragsäulen befestigt werden.

Weiterhin ist in dem DE 90 05 168 U1 ein Adapter für Stromsammelschienen beschrieben. Durch den Adapter, der aus einem Kontaktstück und einem Haken besteht, wird eine erste Stromsammelschiene mechanisch an einer zweiten Stromsammelschiene befestigt.

Aufgabe der vorliegenden Erfindung ist es, ein konstruktiv einfach aufgebautes Auslegersystem für die Oberleitungen elektrischer Fahrzeuge, insbesondere für die Oberleitungen elektrischer Bahnen, zu schaffen.

Die Aufgabe wird erfindungsgemäß durch die im Anspruch 1 angegebenen Merkmale gelöst. Vorteilhafte Ausgestaltungen der Erfindung sind jeweils Gegenstand von weiteren Ansprüchen.

Das erfindungsgemäße Auslegersystem umfaßt
- wenigstens einen zylindrischen Formkörper, der als an beiden Enden offenes Hohlkammerprofil ausgebildet ist und der wenigstens eine parallel zu seiner Längsachse angeordnete Aufnahmenut aufweist, die sich bis zu den Stirnflächen des zylindrischen Formkörpers erstreckt, und
- wenigstens eine Armatur, die zumindest teilweise formschlüssig auf den zylindrischen Formkörper aufsetzbar ist und mittels wenigstens eines Befestigungselementes, das radial in die Aufnahmenut einführbar ist, am zylindrischen Formkörper kraftschlüssig gehalten ist, und/oder
- wenigstens eine End-Armatur, die in den zylindrischen Formkörper axial einschiebbar ist und mittels wenigstens eines Befestigungsteils im zylindrischen Formkörper kraftschlüssig gehalten ist.

Das Auslegersystem nach Anspruch 1 ermöglicht eine einfache und schnelle Montage der benötigten Armaturen. Durch das radiale Aufstecken der Armatur wird gleichzeitig ihr Befestigungselement in die Aufnahmenut eingeführt. Nach dem kraftschlüssigen Befestigen des Befestigungselements ist die Montage der Armatur abgeschlossen. In vorteilhafter Weise können beim erfindungsgemäßen Auslegersystem zusätzliche Armaturen angebracht werden, ohne daß die bereits vorhandenen Armaturen vorher entfernt werden müssen. Für einen Austausch von Armaturen bei Reparatur- oder Wartungsarbeiten gilt entsprechendes. Das Auslegersystem nach Anspruch 1 ist darüber hinaus auch für herkömmliche Armaturen, die mittels Rohrschellen oder Bügelschrauben befestigbar sind, geeignet.

Bei einem Auslegersystem gemäß Anspruch 7 ist es in vorteilhafter Weise möglich, die Armaturen unabhängig von in der radial gegenüberliegenden Aufnahmenut befestigten Armaturen am zylindrischen Formkörper entlang zu verschieben.

Dadurch, daß bei dem Auslegersystem gemäß Anspruch 1 die Armatur lediglich in die Aufnahmenut des zylindrischen Formkörpers eingreift, den zylindrischen Formkörper also nicht umschließt, ist dieselbe Armatur an allen zylindrischen Formkörpern - unabhängig von der Größe des zylindrischen Formkörpers - montierbar. Damit ergibt sich in besonders vorteilhafter Weise bei den Armaturen eine Reduzierung in der Größenvielfalt.

Weitere Vorteile und Einzelheiten der Erfindung ergeben sich aus der nachfolgenden Beschreibung von Ausführungsbeispielen anhand der Zeichnung und in Verbindung mit den weiteren Ansprüchen. Es zeigen:
- FIG 1 bis 3: jeweils eine Ausführungsform eines zylindrischen Formkörpers des erfindungsgemäßen Auslegersystems im Querschnitt,
- FIG 4: eine stirnseitige Ansicht eines zylindrischen Formkörpers des erfindungsgemäßen Auslegersystems mit montierter Armatur,
- FIG 5 bis 8: Armaturen, die für den endseitigen Einbau in einen zylindrischen Formkörper gemäß den FIG 1 bis 3 vorgesehen sind,
- FIG 9 bis 12: die zylindrischen Formkörper gemäß den FIG 1 bis 3 mit einer montierten Armatur gemäß FIG 7.

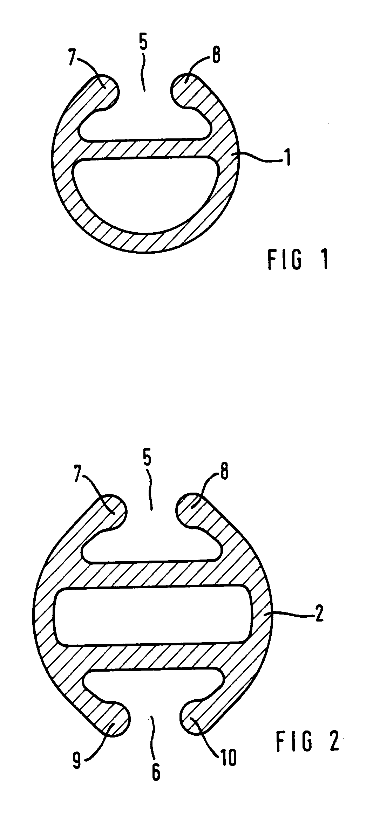

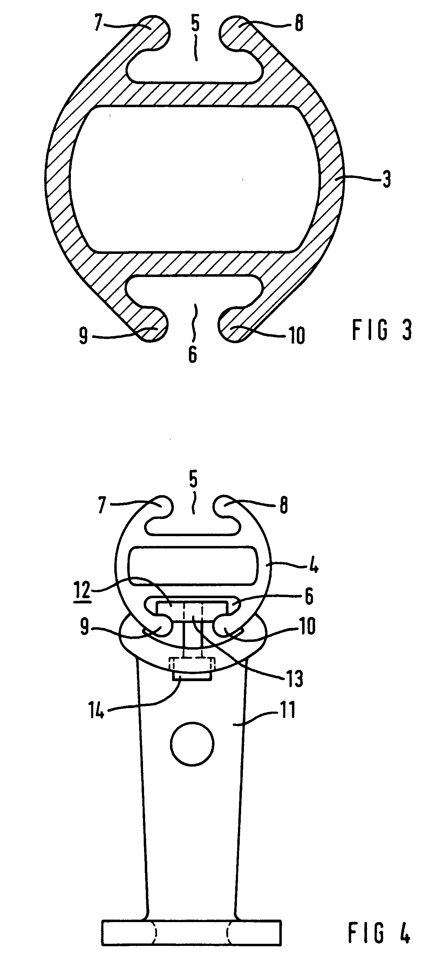

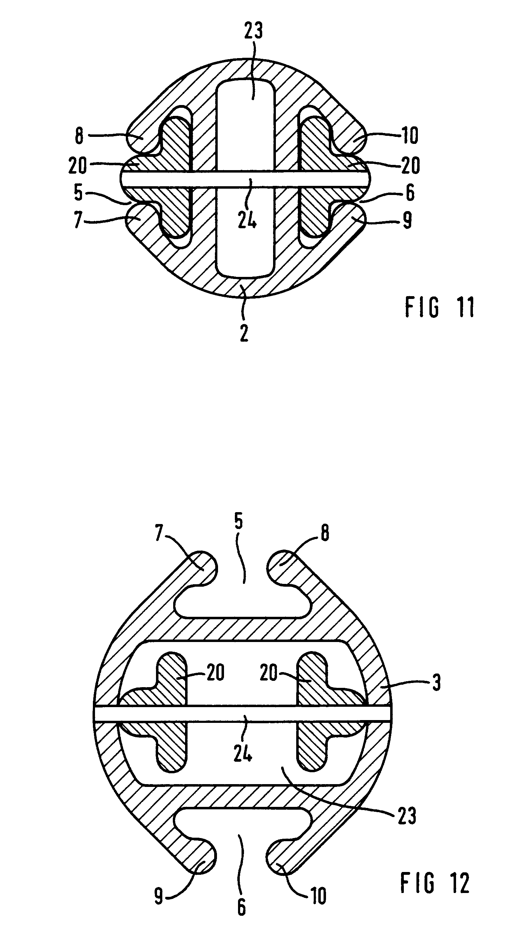

In den FIG 1,9 und 10 ist mit 1 ein zylindrischer Formkörper einer ersten Ausführungsform des erfindungsgemäßen Auslegersystems bezeichnet. Mit 2 ist ein zylindrischer Formkörper eines zweiten, in den FIG 2 und 11 dargestellten Ausführungsbeispiels bezeichnet. Bei einer dritten Ausgestaltung des erfindungsgemäßen Auslegersystems gemäß den FIG 3 und 12 weist der zylindrische Formkörper das Bezugszeichen 3 auf. Ein zylindrischer Formkörper einer weiteren Ausführungsform des erfindungsgemäßen Auslegersystems in FIG 4 ist mit dem Bezugszeichen 4 gekennzeichnet.

Die zylindrischen Formkörper 1 bis 4 sind als Hohlkammerprofile ausgebildet und weisen entweder einen kreisförmigen Querschnitt (Formkörper 1 und 4 in den FIG 1,4,9 und 10) oder einen ovalen Querschnitt (Formkörper 2 und 3 in den FIG 2,3,11 und 12) auf. Der zylindrische Formkörper 1 weist nur eine parallel zu seiner Längsachse angeordnete Aufnahmenut 5 auf. Die zylindrischen Formkörper 2,3 und 4 weisen zusätzlich zur Aufnahmenut 5 jeweils eine zweite, ebenfalls parallel zur Längsachse des Formkörpers liegende Aufnahmenut 6 auf.

Die in den FIG 1 bis 4 sowie 9 bis 12 gezeigten Aufnahmenuten 5 und 6 sind im wesentlichen T-förmig ausgebildet. Die Aufnahmenuten 5 und 6 sind radial nach außen hin verengend ausgebildet, wobei die Enden 7 bis 10 der schräg verlaufenden Flanken der Aufnahmenuten 5 und 6 wulstartig ausgebildet sind.

Bei den in den FIG 1 bis 4 sowie 9 bis 12 dargestellten zylindrischen Formkörpern 1 bis 4 ist auf einfache Weise eine Armatur 11 radial aufsteckbar. Durch das radiale Aufstecken der Armatur 11 wird gleichzeitig ihr Befestigungselement 12 in die Aufnahmenut 5 bzw.6 eingeführt. Bei dem in FIG 4 dargestellten Ausführungsbeispiel umfaßt das Befestigungselement einen Klemmstein 13, der parallel zur Aufnahmenut 6 zeigend beim radialen Aufstecken der Armatur 11 in die Aufnahmenut 6 eingeführt wird, sowie eine Schraube 14. Beim Festziehen der Schraube 14 verdreht sich der Klemmstein 13 um 90° und wird formschlüssig gegen die wulstartig ausgebildeten Enden 9 und 10 der Aufnahmenut 6 gedrückt. An der Wulst treten aufgrund des Formschlusses entgegengerichtete Kräfte auf. Man erhält damit eine kraftschlüssige Verbindung, die ähnlich wie ein Hinterschnitt eine nicht lösbare Verbindung darstellt.

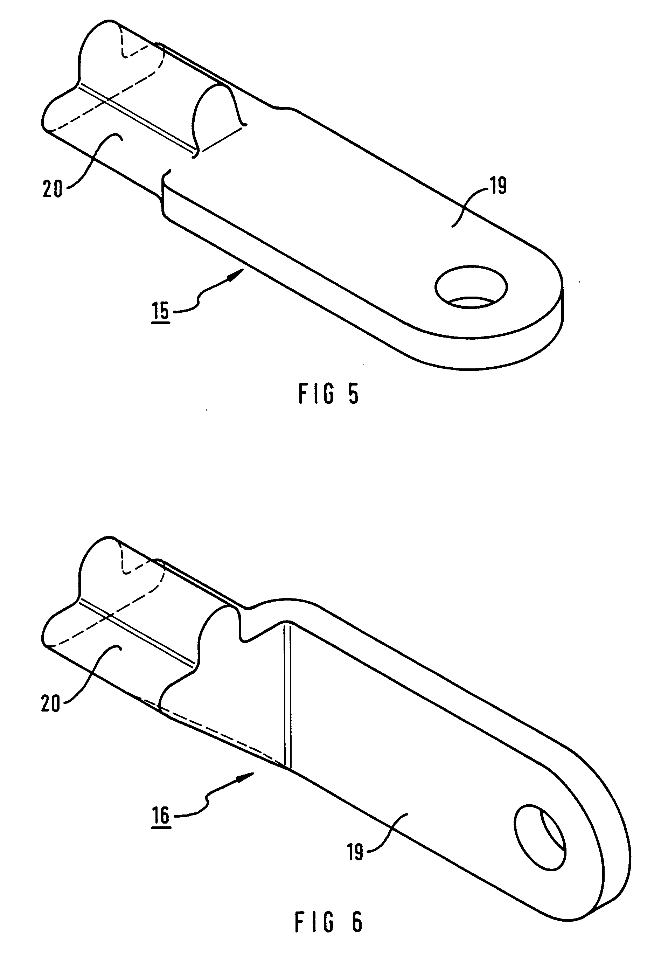

Die dargestellten Formkörper 1 bis 4 sind als, an beiden Enden offene Hohlkammerprofile ausgebildet. Zusammen mit den sich bis zu den Stirnflächen der Formkörper 1 bis 4 erstrekkenden Aufnahmenuten 5 bzw.5 und 6 können die End-Armaturen 15 bis 18 gemäß den FIG 5 bis 8 axial auf die Formkörper 1 bis 4 aufgesteckt werden.

Die in FIG 5 und 6 gezeigten End-Armaturen 15 bzw.16 bestehen jeweils aus einer Gabellasche 19 und einem daran angeformten Befestigungsteil 20. Die End-Armatur 15 in FIG 5 unterscheidet sich von der End-Armatur 16 in FIG 6 dadurch, daß bei der End-Armatur 15 die Gabellasche 19 mittig am Befestigungsteil 20 angebracht ist, wohingegen bei der End-Armatur 16 die Gabellasche 19 am Befestigungsteil 20 gekröpft angeformt ist; die Gabellasche 19 der End-Armatur 16 ist also gegenüber der Gabellasche 19 der End-Armatur 15 um 90° verdreht.

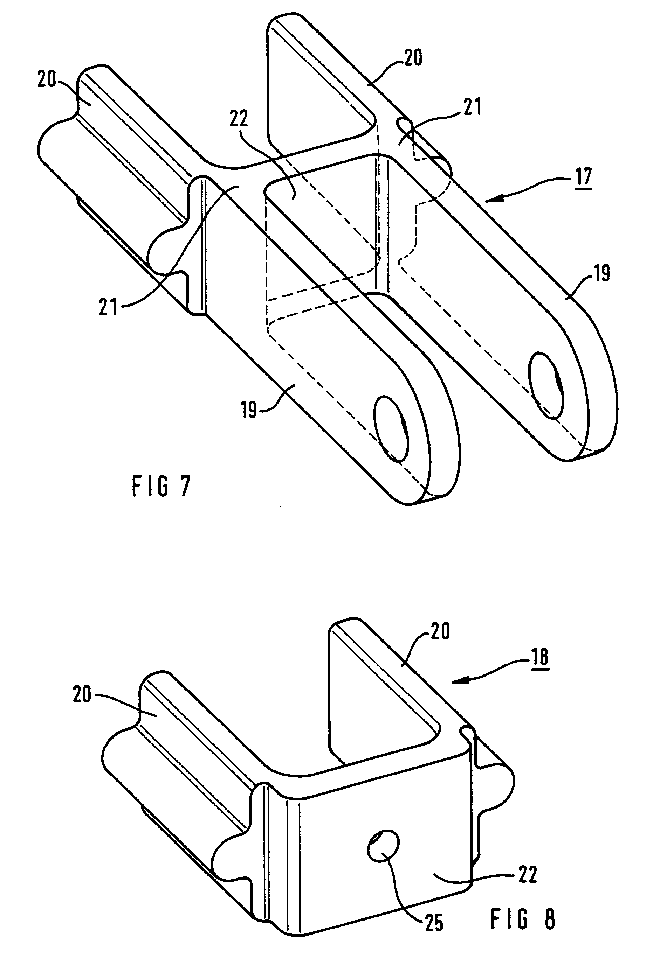

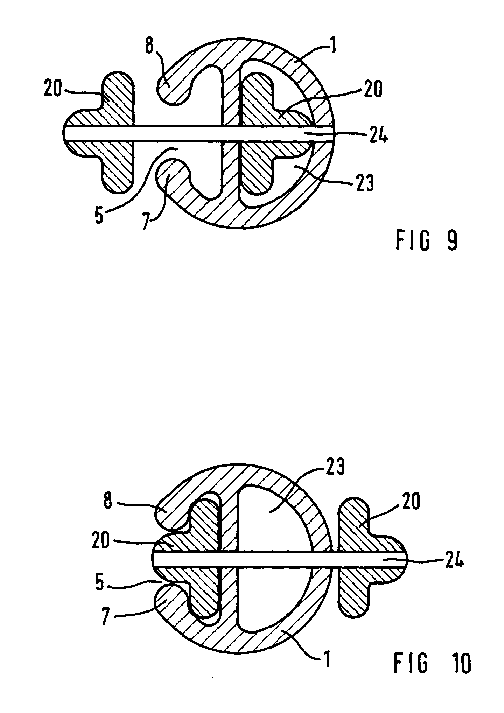

Die End-Armatur 17 gemäß FIG 7 besteht aus zwei gleichen Armaturteilen 21, die - ähnlich der End-Armatur 15 - ebenfalls jeweils aus einer Gabellasche 19 und einem daran angeformten Befestigungsteil 20 bestehen. Beide Armaturteile 21 sind mittels eines angeformten Steges 22 miteinander verbunden. Die End-Armatur 17 wird an dem zylindrischen Formkörper 1 bzw. 3 dadurch befestigt, daß wenigstens ein Befestigungsteil 20 in die Hohlkammer 23 des zylindrischen Formkörpers 1 bzw.3 axial einschiebbar ist (FIG 9 bzw.12). Eine weitere Befestigungsmöglichkeit ist in den FIG 10 und 11 gezeigt. In diesen Fällen ist wenigstens ein Befestigungsteil 20 axial in die Aufnahmenut 5 bzw. in die Aufnahmenuten 5 und 6 axial eingeschoben. Zur fixierten Halterung der End-Armatur 17 im zylindrischen Formkörper 1, 2 bzw. 3 dient jeweils eine Spannhülse 24.

In FIG 8 ist eine weitere Ausführungsform einer End-Armatur gezeigt. Diese End-Armatur 18 besteht lediglich aus zwei Befestigungsteilen 20, die durch einen Steg 22 miteinander verbunden sind. Die End-Armatur 18 in FIG 8 weist also im Gegensatz zur End-Armatur 17 in FIG 7 keine Gabellasche 19 auf. Der Steg 22 ist als plane Fläche ausgeführt und weist eine Bohrung 25 auf. In diese Bohrung kann z.B. eine Befestigungsschraube eingeführt werden, um auf diese Weise z. B. einen Isolator zu befestigen.

## Patentansprüche

1. Auslegersystem für Oberleitungen elektrischer Fahrzeuge, das folgende Merkmale umfaßt:
- wenigstens einen zylindrischen Formkörper (1 - 4), der als an beiden Enden offenes Hohlkammerprofil ausgebildet ist und der wenigstens eine parallel zu seiner Längsachse angeordnete Aufnahmenut (5, 6) aufweist, die sich bis zu den Stirnflächen des zylindrischen Formkörpers (1 - 4) erstreckt, und
- wenigstens eine Armatur (11), die zumindest teilweise formschlüssig auf den zylindrischen Formkörper (1 - 4) aufsetzbar ist und mittels wenigstens eines Befestigungselementes (12 - 14), das radial in die Aufnahmenut (5, 6) einführbar ist, am zylindrischen Formkörper (1 - 4) kraftschlüssig gehalten ist, und/oder
- wenigstens eine End-Armatur (15 - 18), die in den zylindrischen Formkörper (1 - 4) axial einschiebbar ist und mittels wenigstens eines Befestigungsteils (20) im zylindrischen Formkörper (1 - 4) kraftschlüssig gehalten ist.

2. Auslegersystem nach Anspruch 1, wobei der zylindrische Formkörper (1, 4) einen kreisförmigen Querschnitt aufweist.

3. Auslegersystem nach Anspruch 1, wobei der zylindrische Formkörper (2, 3) einen ovalen Querschnitt aufweist.

4. Auslegersystem nach Anspruch 1, wobei der zylindrische Formkörper als Stabprofil ausgebildet ist.

5. Auslegersystem nach einem der Ansprüche 1 bis 4, wobei die Aufnahmenut (5, 6) im wesentlichen T-förmig ausgebildet ist.

6. Auslegersystem nach Anspruch 5, wobei die Aufnahmenut (5, 6) des zylindrischen Formkörpers radial nach außen hin verengend ausgebildet ist und die schräg verlaufenden Flanken der Aufnahmenut (5, 6) wulstartig ausgebildete Enden (7 - 10) aufweisen.

7. Auslegersystem nach einem der Ansprüche 1 bis 6, wobei der zylindrische Formkörper (2 - 4) zwei radial gegenüberliegend angeordnete Aufnahmenuten (5, 6) aufweist.

8. Auslegersystem nach einem der Ansprüche 1 bis 7, wobei der zylindrische Formkörper (1 - 4) aus einem metallischen Werkstoff besteht.

9. Auslegersystem nach einem der Ansprüche 1 bis 7, wobei der zylindrische Formkörper (1 - 4) aus einem glasfaserverstärkten Kunststoff besteht.

10. Auslegersystem nach Anspruch 1, wobei das Befestigungselement (12) der Armatur derartig ausgebildet ist, daß dieses nach seiner Befestigung einen zumindest teilweisen Formschluß mit der Aufnahmenut (5, 6) bildet.

11. Auslegersystem nach Anspruch 1 oder 10, wobei das Befestigungselement (12) wenigstens eine Klemmplatte oder einen Klemmstein (13) umfaßt.

12. Auslegersystem nach Anspruch 1 oder 10, wobei das Befestigungselement (12) wenigstens einen T-Nutenstein umfaßt.

13. Auslegersystem nach Anspruch 1, wobei die End-Armatur (17) aus zwei gleichen Armaturteilen (21) besteht, die durch einen Steg (22) miteinander verbunden sind und die jeweils eine Gabellasche (19) und ein daran angeordnetes Befestigungsteil (20) umfassen.

14. Auslegersystem nach Anspruch 1, wobei die End-Armatur (15, 16) aus einer Gabellasche (19) sowie einem daran angeordneten Befestigungsteil (20) besteht.

15. Auslegersystem nach Anspruch 1, wobei die End-Armatur aus zwei Befestigungsteilen (20) besteht, die durch einen Steg (22), der wenigstens eine Bohrung (25) aufweist, miteinander verbunden sind.

16. Auslegersystem nach einem der Ansprüche 13 bis 15, wobei die End-Armatur wenigstens ein Befestigungsteil (20) aufweist, das in die Hohlkammer (23) des zylindrischen Formkörpers (1 - 3) axial einschiebbar ist.

17. Auslegersystem nach einem der Ansprüche 13 bis 15, wobei die End-Armatur wenigstens ein Befestigungsteil (20) aufweist, das in wenigstens eine Aufnahmenut (5, 6) des zylindrischen Formkörpers (1 - 3) axial einschiebbar ist.

## Claims

1. Bracket system for overhead lines of electric vehicles which has the following features:
- at least one cylindrical moulded body (1 - 4), which is constructed as a hollow-chamber profile open at both ends and which has at least one receiving groove (5, 6) arranged parallel to its longitudinal axis, which receiving groove extends up to the end faces of the cylindrical moulded body (1 - 4), and
- at least one fitting (11), which can be put on to the cylindrical moulded body (1 - 4) in an at least partially form-locking manner and is held on the cylindrical moulded body (1 - 4) in a force-locking manner by means of at least one fastening element (12 - 14), which can be inserted radially into the receiving groove (5, 6) and/or
- at least one end fitting (15 - 18), which can be inserted axially into the cylindrical moulded body (1 - 4) and is held in the cylindrical moulded body (1 - 4) in a force-locking manner by means of at least one fastening portion (20).

2. Bracket system according to claim 1, wherein the cylindrical moulded body (1, 4) has a circular cross-section.

3. Bracket system according to claim 1, wherein the cylindrical moulded body (2, 3) has an oval cross-section.

4. Bracket system according to claim 1, wherein the cylindrical moulded body is constructed as a rod profile.

5. Bracket system according to one of claims 1 to 4, wherein the receiving groove (5, 6) is constructed in a manner such that it is substantially T-shaped.

6. Bracket system according to claim 5, wherein the receiving groove (5, 6) of the cylindrical moulded body is constructed in a manner such that it narrows radially towards the outside, and the obliquely extending sides of the receiving groove (5, 6) have ends (7 - 10) which are constructed in a manner such that they have a bead.

7. Bracket system according to one of claims 1 to 6, wherein the cylindrical moulded body (2 - 4) has two receiving grooves (5, 6) arranged radially opposite each other.

8. Bracket system according to one of claims 1 to 7, wherein the cylindrical moulded body (1 - 4) consists of a metallic material.

9. Bracket system according to one of claims 1 to 7, wherein the cylindrical moulded body (1 - 4) consists of a glass fibre reinforced plastics.

10. Bracket system according to claim 1, wherein the fastening element (12) of the fitting is constructed in such a way that after it has been fastened, it forms an at least partial form closure with the receiving groove (5, 6).

11. Bracket system according to claim 1 or 10, wherein the fastening element (12) comprises at least one clamping plate or a clamping block (13).

12. Bracket system according to claim 1 or 10, wherein the fastening element (12) comprises at least one T sliding block.

13. Bracket system according to claim 1, wherein the end fitting (17) comprises two like fitting portions (21), which are connected to each other by a web (22) and which each comprise a clevis strap (19) and a fastening portion (20) arranged thereon.

14. Bracket system according to claim 1, wherein the end fitting (15, 16) comprises a clevis strap (19) and a fastening portion (20) arranged thereon.

15. Bracket system according to claim 1, wherein the end fitting comprises two fastening portions (20), which are connected to each other by a web (22) which has at least one bore (25).

16. Bracket system according to one of claims 13 to 15, wherein the end fitting has at least one fastening portion (20), which can be inserted axially into the hollow chamber (23) of the cylindrical moulded body (1 - 3).

17. Bracket system according to one of claims 13 to 15, wherein the end fitting has at least one fastening portion (20), which can be inserted axially into at least one receiving groove (5, 6) of the cylindrical moulded body (1 - 3).

## Revendications

1. Système de support d'une caténaire de véhicule électrique qui comprend les caractéristiques suivantes :
- au moins un corps (1 à 4) façonné cylindrique qui est constitué sous la forme d'un profil à chambre creuse ouvert aux deux extrémités et qui comporte au moins une gorge (5, 6) de réception, qui est disposée parallèlement à son axe longitudinal et qui s'étend jusqu'aux surfaces frontales du corps (1 à 4) façonné cylindrique et
- au moins une armature (11) qui peut être posée au moins partiellement par complémentarité de forme sur le corps (1 à 4) façonné cylindrique et qui est maintenue par coopération de force au moyen d'au moins un élément (12 à 14) de fixation qui peut être introduit radialement dans la gorge (5, 6) de réception sur le corps (1 à 4) façonné cylindrique et/ou
- au moins une armature (15 à 18) d'extrémité qui peut coulisser axialement dans le corps (1 à 4) façonné cylindrique et qui est maintenue par coopération de force au moyen d'au moins une pièce (20) de fixation dans le corps (1 à 4) façonné cylindrique.

2. Système de support suivant la revendication 1, dans lequel le corps (1 à 4) façonné cylindrique a une section transversale circulaire.

3. Système de support suivant la revendication 1, dans lequel le corps (2, 3) façonné cylindrique a une section transversale ovale.

4. Système de support suivant la revendication 1, dans lequel le corps façonné cylindrique est constitué en profilé en barreau.

5. Système de support suivant l'une des revendications 1 à 4, dans lequel la gorge (5, 6) de réception a sensiblement une forme en T.

6. Système de support suivant la revendication 5, dans lequel la gorge (5, 6) de réception du corps façonné cylindrique se rétrécit radialement vers l'extérieur et les flancs inclinés de la gorge (5, 6) de réception comportent des extrémités (7 à 10) en bourrelets.

7. Système de support suivant l'une des revendications 1 à 6, dans lequel le corps (2 à 4) façonné cylindrique comporte deux corps (5, 6) de réception radialement opposés.

8. Système de support suivant l'une des revendications 1 à 7, dans lequel le corps (1 à 4) façonné cylindrique est en un matériau métallique.

9. Système de support suivant l'une des revendications 1 à 7, dans lequel le corps (1 à 4) façonné cylindrique est en une matière plastique renforcée par de la fibre de verre.

10. Système de support suivant la revendication 1, dans lequel l'élément (12) de fixation de l'armature est constitué de façon que celle-ci soit, après sa fixation, à complémentarité de forme au moins partielle avec la gorge (5, 6) de réception.

11. Système de support suivant la revendication 1 ou 10, dans lequel l'élément (12) de fixation comprend au moins une plaque de serrage ou un bloc (13) de serrage.

12. Système de support suivant la revendication 1 ou 10, dans lequel l'élément (12) de fixation comporte au moins un bloc à gorge en T.

13. Système de support suivant la revendication 1, dans lequel l'armature (17) d'extrémité est constituée de deux parties (21) identiques d'armature qui sont reliées entre elles par une âme (22) et qui comporte respectivement une éclisse (19) en fourche et une partie (20) de fixation qui y est raccordée.

14. Système de support suivant la revendication 1, dans lequel l'armature (15, 16) d'extrémité est constituée d'une éclisse (19) en fourche ainsi que d'une partie (20) de fixation qui y est raccordée.

15. Système de support suivant la revendication 1, dans lequel l'armature d'extrémité est constituée de deux parties (20) de fixation qui sont reliées entre elles par une âme (22) qui comporte au moins un trou (25).

16. Système de support suivant l'une des revendications 13 à 15, dans lequel l'armature d'extrémité comporte au moins une partie (20) de fixation qui peut coulisser axialement dans la chambre (23) creuse du corps (1 à 3) façonné cylindrique.

17. Système de support suivant l'une des revendications 13 à 15, dans lequel l'armature d'extrémité comporte au moins une partie (20) de fixation qui peut coulisser axialement dans au moins une gorge (5, 6) de réception du corps (1 à 3) façonné cylindrique.
